# EUROPEAN PATENT APPLICATION

(11) **EP 4 477 340 A1**
(43) Date of publication of application: **18.12.2024**
(21) Application number: 24182081.0
(22) Date of filing: 13.06.2024
(51) Int. Cl.: B22F 10/28, B22F 10/38, B22F 10/85, B22F 12/20, B22F 12/43, B33Y 10/00, B33Y 30/00, B33Y 50/02

(54) **ADDITIVE MANUFACTURING METHOD FOR PRODUCTION OF HIERARCHICAL DESIGN OPTIMIZED COMPOSITE MATERIALS**

(30) Priority: 13.06.2023 US 202318334179
(71) Applicant: RTX Corporation, Farmington, CT 06032 (US)
(72) Inventor: BURLATSKY, Sergei F., Farmington, 06032 (US); ROELOFS, Andreas Karl, Farmington, 06032 (US); ANAHID, Masoud, Farmington, 06032 (US); ACHARYA, Ranadip, Farmington, 06032 (US); EL-WARDANY, Tahany, Farmington, 06032 (US); FURRER, David U., Farmington, 06032 (US)
(74) Representative: Dehns

(57) **Abstract**

The present invention provides improved additive manufacturing methods and systems. More particularly, the present invention provides advantageous additive manufacturing methods and systems for the production of hierarchical design optimized components (e.g., composite or composite-like materials). The present invention provides a methodology to produce hierarchical design optimized additively manufactured parts/materials that include an inhomogeneous structure with variable local mechanical properties across the entire volume. Hierarchical inhomogeneous structure/composite materials can be produced through a laser powder bed fusion (LPBF) process. A novel LPBF method can be used to obtain location-specific properties through in-situ controlling of the local cooling rate during the additive manufacturing process.

## Description

### TECHNICAL FIELD

The present invention relates to additive manufacturing methods and systems and, more particularly, to additive manufacturing methods and systems for the production of hierarchical design optimized components (e.g., composite or composite-like materials).

### BACKGROUND

In general, some hierarchical composite materials can include an amorphous structure or metal glass, which can have excellent elastic modulus. However, this type of material tends to be brittle. A hybrid structure with crystalline grains in an amorphous matrix can be used to accommodate some plastic strain and impart ductility while maintaining high fatigue resistance and elastic modulus. The production of a real-life size part made from bulk metallic glass can be challenging because of high cooling rate requirements.

### BRIEF DESCRIPTION

The present invention provides improved additive manufacturing methods and systems. More particularly, the present invention provides advantageous additive manufacturing methods and systems for the production of hierarchical design optimized components (e.g., composite or composite-like materials).

The present invention provides a methodology to produce hierarchical design optimized additively manufactured parts/materials that include an inhomogeneous structure with variable local mechanical properties across the entire volume.

According to an aspect of the present invention, there is provided an additive manufacturing method for the production of a component including providing a material; utilizing additive manufacturing to fabricate the component from the material; and obtaining location-specific properties through in-situ controlling of a local cooling rate during the additive manufacturing to fabricate the component.

Optionally, and in accordance with the above, the component is a composite-like material.

Optionally, and in accordance with any of the above, the additive manufacturing comprises laser powder bed fusion.

Optionally, and in accordance with any of the above, the component is a hierarchical inhomogeneous composite-like material.

Optionally, and in accordance with any of the above, the component is an inhomogeneous structure with variable local mechanical properties across an entire volume of the inhomogeneous structure.

Optionally, and in accordance with any of the above, the material comprises bulk metallic glass.

Optionally, and in accordance with any of the above, the component comprises bulk metallic glass.

Optionally, and in accordance with any of the above, controlling the local cooling rate comprises utilizing modeling.

Optionally, and in accordance with any of the above, the modeling comprises utilizing an integrated computational fluid dynamics model and analytical models.

Optionally, and in accordance with any of the above, the modeling comprises utilizing a defect process map prediction fast acting model.

Optionally, and in accordance with any of the above, the modeling comprises utilizing solidification map prediction models.

Optionally, and in accordance with any of the above, the modeling comprises utilizing a phase field model for microstructure prediction and customization.

Optionally, and in accordance with any of the above, controlling the local cooling rate comprises utilizing a cryogenic cooling system internally installed in a laser powder bed machine, or use of computational fluid dynamics models to control the local cooling rate during layer deposition.

Optionally, and in accordance with any of the above, the cryogenic cooling system is a liquid nitrogen cryogenic cooling system designed specifically for laser powder bed fusion machines, and where a specific mask design and materials are used to prevent powder spatter during deposition.

Optionally, and in accordance with any of the above, the component comprises alternating hard-soft zones or features by controlling the high cooling rate and its application direction.

Optionally, and in accordance with any of the above, during additive manufacturing each layer of the component is initially built soft and then selected layers are hardened.

Optionally, and in accordance with any of the above, the additive manufacturing comprises utilizing a laser in a pulsed regime.

Optionally, and in accordance with any of the above, the component is a hybrid structure with crystalline grains in an amorphous matrix that accommodates plastic strain and imparts ductility while maintaining fatigue resistance and elastic modulus.

The above described and other features are exemplified by the following figures and detailed description.

Any combination or permutation of embodiments is envisioned. Additional features, functions and applications of the disclosed methods, systems and assemblies of the present invention will be apparent from the description which follows, particularly when read in conjunction with the appended figures. All references listed in this invention are hereby incorporated by reference in their entireties.

### BRIEF DESCRIPTION OF THE DRAWINGS

The following figures are example embodiments wherein the like elements are numbered alike.

Features and aspects of embodiments are described below with reference to the accompanying drawings, in which elements are not necessarily depicted to scale.

Example embodiments of the present invention are further described with reference to the appended figures. It is to be noted that the various steps, features and combinations of steps/features described below and illustrated in the figures can be arranged and organized differently to result in embodiments which are still within the scope of the present invention. To assist those of ordinary skill in the art in making and using the disclosed methods, systems and assemblies, reference is made to the appended figures, wherein:
FIGS. 1A and 1B show hierarchical structure composites with variable hardness produced during deposition of each layer (grey blocks and heavy black lines are hard, white is soft);
FIG. 2 depicts a framework showing use of computational fluid dynamics (CFD), a defect process map, a solidification map and a phase field model to identify a process zone that forms amorphous microstructure;
FIG. 3 shows a melt pool in continuous laser (left side of FIG. 3), and also shows pulsed laser powder bed fusion (right side of FIG. 3);
FIG. 4 depicts thermal spray with liquid nitrogen (LN) cryogenic cooling technology used to control interpass temperature and improve duty cycle; and
FIG. 5A shows an amorphous structure with irregular arrangement of atoms, and FIG. 5B shows a crystalline structure with ordered atoms.

### DETAILED DESCRIPTION

The example embodiments disclosed herein are illustrative of additive manufacturing methods and systems for the production of hierarchical design optimized components (e.g., composite or composite-like materials). It should be understood, however, that the disclosed embodiments are merely examples of the present invention, which may be embodied in various forms. Therefore, details disclosed herein with reference to example additive manufacturing methods and systems and associated processes/techniques of fabrication and use are not to be interpreted as limiting, but merely as the basis for teaching one skilled in the art how to make and use the methods/systems and/or alternative methods/systems of the present invention.

The present invention provides improved additive manufacturing methods and systems. More particularly, the present invention provides advantageous additive manufacturing methods and systems for the production of hierarchical design optimized components (e.g., composite or composite-like materials).

As noted, some hierarchical composite materials can include an amorphous structure or metal glass, and this type of material can be brittle. A hybrid structure with crystalline grains in an amorphous matrix can be used to accommodate some plastic strain and impart ductility while maintaining high fatigue resistance and elastic modulus. It is noted that the production of a real-life size part made from bulk metallic glass can be challenging because of high cooling rate requirements.

In example embodiments, the present invention advantageously provides an additive manufacturing method (e.g., utilizing laser powder bed fusion - LPBF) for the production of a composite or composite-like material. It is noted that LPBF additive manufacturing offers a unique opportunity to control local cooling rate and the resulting hierarchical structures uniformly as parts are built layer wise.

The present invention provides a methodology to produce hierarchical design optimized additively manufactured parts/materials that include an inhomogeneous structure with variable local mechanical properties across the entire volume.

In example embodiments, hierarchical inhomogeneous structure/composite materials can be produced through the LPBF process. A novel LPBF method can be used to obtain location-specific properties through in-situ controlling of the local cooling rate during the additive manufacturing process. The change in the production of hierarchical graded composite or composite-like materials can depend on additions to the LPBF machine and methods of in situ cooling.

In some embodiments, the present invention provides for controlling the cooling rate through modeling and utilization of a cryogenic cooling system to induce a very high quenching or cooling rate for controlling the hierarchical structured composite or composite-like material using a LPBF process.

In example embodiments, the present invention provides for at least three features and/or method steps. A first feature and/or steps includes using process models to obtain a hierarchical structure containing different crystalline and amorphous grains.

A second feature and/or steps includes carefully designing the hierarchical structure to enable fabrication of compositionally graded composite or composite-like materials.

A third feature and/or steps includes combining multiple compositions and process parameter sets (e.g., for different cooling rate) to obtain simultaneous variation in microstructure type (e.g., amorphous/crystalline) and microstructural features (e.g., grain size and aspect ratio). In addition, a cryogenic cooling system can be used to cool the melt pool very quickly and effectively, generating a sharp heat boundary and/or reduce heat diffusion around the melt pool, generating a sharp heat boundary.

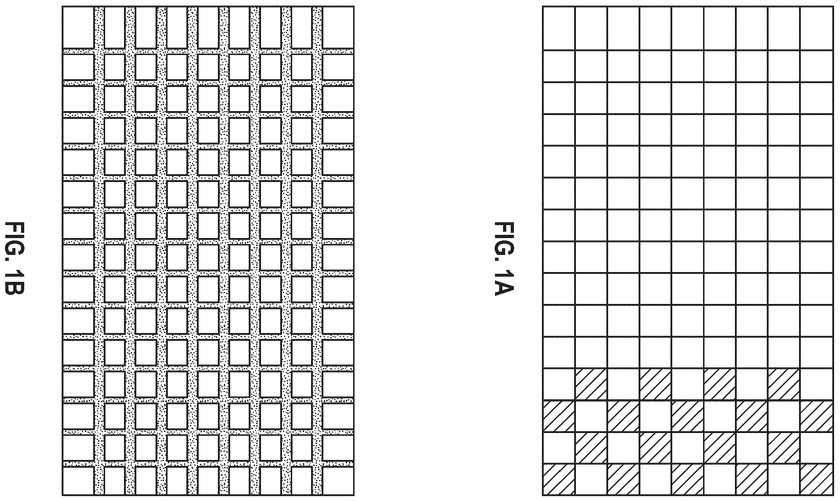

The present invention provides that additively manufactured parts can be produced with variable mechanical properties by in-situ controlling of the cooling rate. One embodiment is a hierarchal or "composite" or composite-like material with alternating hard-soft zones or features, where in one instantiation hard grains provide the overall strength of the material, and soft grains work as crack-trapping or stopping sites - see FIGS. 1A and 1B.

The cooling rate has a direct influence on the local dislocation density and residual stress which in turn controls the hardness and fatigue strength of the material. The local bulk variability of properties is taking advantage of the fact that additive manufacturing builds parts by sequential layers. In example embodiments, the present invention provides to build each layer initially soft, and then selected layers are hardened.

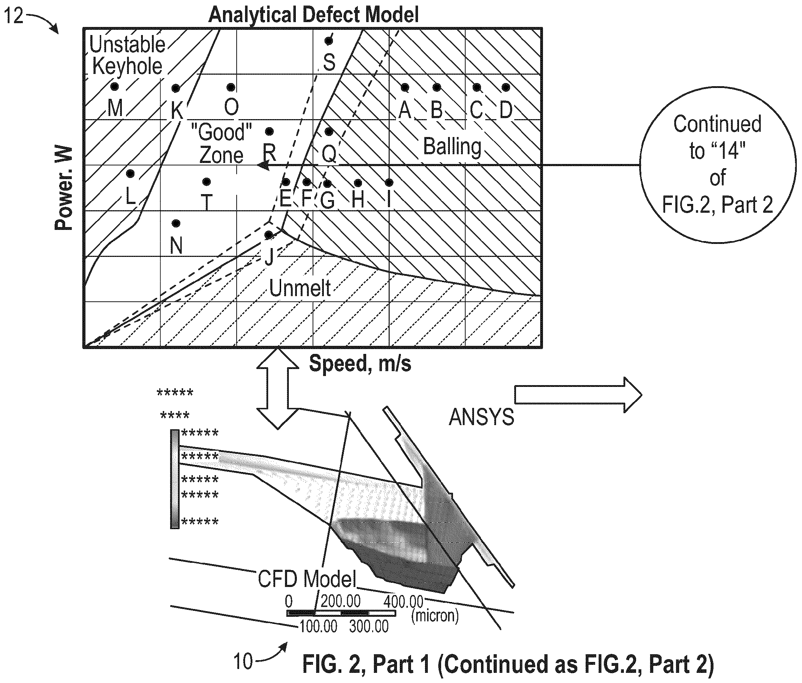

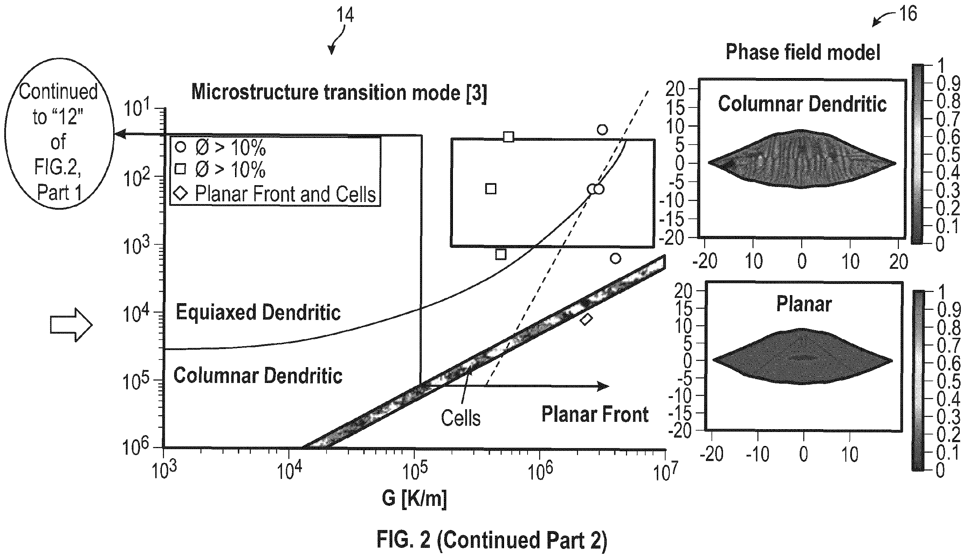

That can be achieved by a special set of parameters to ensure small thermal gradients and consequently small cooling rates. The cooling rate can be predicted offline using a developed model, illustrated in FIG. 2.

FIG. 2 depicts a framework showing use of a computational fluid dynamics (CFD) model 10, a defect process map 12, a solidification map 14 and a phase field model 16 to identify a process zone that forms amorphous microstructure. As such, the present invention provides for using a combination of defect models and a microstructural model to create an amorphous structure. The defect model 12 can be used to identify the "good" or substantially defect-free zone, while the cooling rate required for amorphous transition (e.g., normally greater than 10⁶ K/s) can be maintained through selection of process parameters within the good or substantially defect-free zone. Further to that custom scan strategy can be implemented to enable transition between amorphous and crystalline structures.

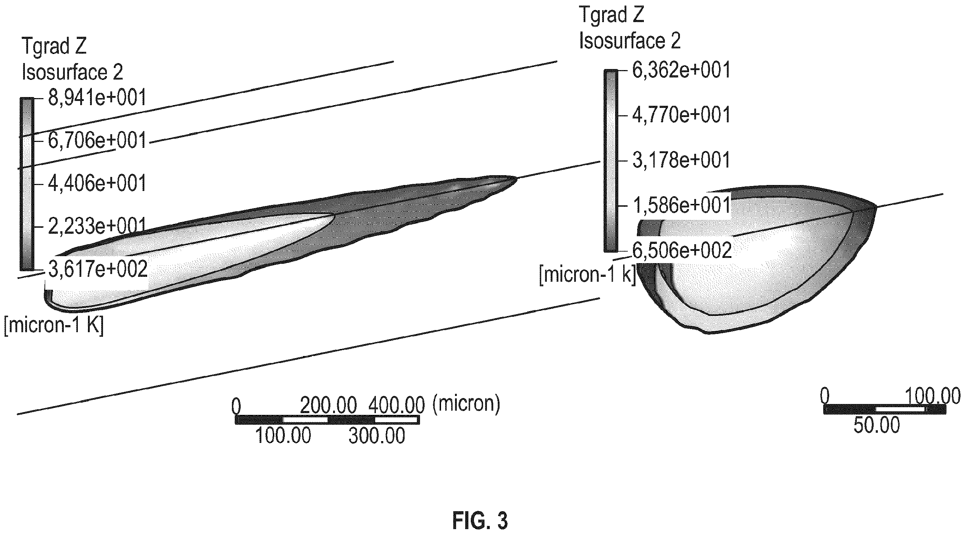

Another way is to use a laser in a pulsed regime with slow power decay for local annealing. Then the laser makes a second path for the same layer with normal speed and power or works in a pulsed regime with fast power decay. At this second path, the laser generates hard quenched structural components such as lines and pillars by taking advantage of generic fast cooling rates of typically a very small (e.g., of the order of hundreds of microns) melt pool in metal environments as shown in FIG. 3. It is noted that FIG. 3 shows a melt pool in continuous wave laser (left side of FIG. 3), and also shows melt pool generated by pulsed laser powder bed fusion (right side of FIG. 3). The result is a part or component built from material that has a soft core and two sets of mutually orthogonal hard lines. This structure resembles a reinforced concrete structure, in some embodiments.

A somewhat similar approach can be used to harden the metal surface by heating the surface by eddy currents and then cooling it fast by rapid heat removal through the bulk of the metal. However, this conventional method provides only surface hardening while the methods of the present invention generate the hard/soft grain structure throughout the part bulk.

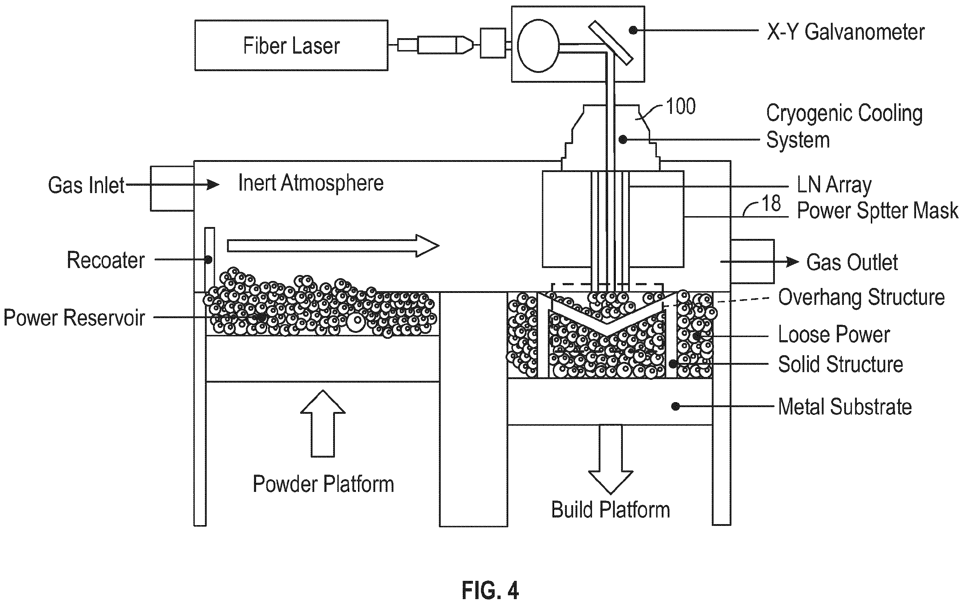

The extreme high cooling rate or fast quenching process can be enhanced by spraying liquid nitrogen (LN) at the sides of the laser spot. For this purpose, a cryogenic cooling system 100 (FIG. 4) can be added in or with respect to the LPBF machine to selectively provide in-situ cooling to the deposit. The LN flow rate and phase (e.g., liquid, liquid-gas, or gas) can be adjusted to produce different cooling rates at different locations in the build layer. The cooling system 100 can be off in the locations where the required cooling rate is minimal. FIG. 4 depicts example thermal spray with a liquid nitrogen (LN) cryogenic cooling system 100 used to control interpass temperature and improve duty cycle. In some embodiments, it is noted that to prevent and/or reduce powder spatter during deposition, a mask 18 can be installed behind the LN nozzle. As such and in certain embodiments, a moving mask 18 can enable laser building and the local cryogenic-quenching stream, but can protect the rest of the powder bed from being disturbed by the cryogenic quenchant stream. The mask 18 can be configured so the powder bed integrity is kept or maintained during building and local quenching. The mask 18 can also mitigate some issues with ejected powder or droplets from the melt pool landing on other parts of the powder bed causing other problems.

The hard lines and pillars can be made of bulk metallic glass (BMG) if the composition and cooling rates are appropriate. An advantage of the cooling method of the present invention is creation of sharper boundaries between soft and hard grains.

Hierarchal structures can be designed and built by additive manufacturing with the same powder feed stock, but with location-specific processing to create desired properties to enable a meso-scale structural material system.

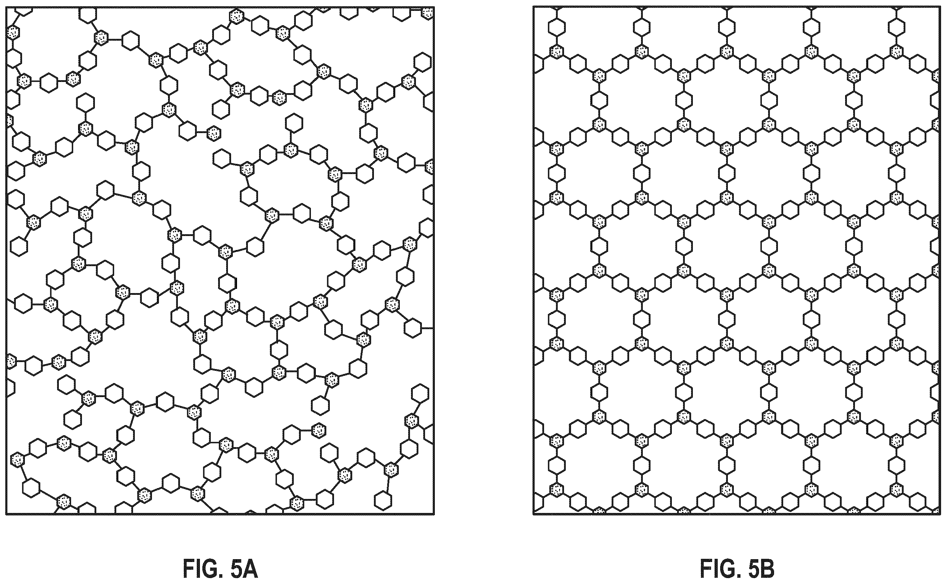

Another embodiment is a hybrid structure with crystalline grains in an amorphous matrix that accommodates some plastic strain and imparts ductility while maintaining high fatigue resistance and elastic modulus (FIGS. 5A and 5B). In example embodiments, to achieve an amorphous matrix an extremely high cooling rate greater than 10⁵-10⁶ K/s can be required, as predicted by the phase field model 16 in FIG. 2. A pulsed laser can be used for this purpose to increase the cooling rate beyond the limit possible through a continuous laser. In example embodiments and with a continuous laser, the melt pool is ellipsoidal and longer in the scan direction, while with a pulsed laser it is hemispherical and a function of laser frequency (see FIG. 3). Hence the frequency can be optimized to have a very small melt pool and consequently a higher cooling rate. This can be effective in creating the amorphous or hard structure. The nanocrystalline grains are created in the amorphous matrix by modulation of laser frequency/process parameter selections. The layer-by-layer nature of additive manufacturing provides an opportunity to create location specific hybrid structure by controlling the cooling rate. In other words, different regions with fully amorphous, hybrid amorphous-crystalline, and fully crystalline structure can be generated depending on property requirements in the component/part.

There are many benefits of the methods, systems and assemblies of the present invention, including, without limitation: controlling material properties; producing completely novel functional composite or composite-like materials; advancing the LPBF process technology; eliminating or reducing defects in the parts; fatigue and yield properties improvements with grain refinement; light weighting of aerostructures; fabrication of strain wave gears with high transmission ratio, actuators; and/or environmental protection for naval applications.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Although the systems and methods of the present invention have been described with reference to example embodiments thereof, the present invention is not limited to such example embodiments and/or implementations. Rather, the systems and methods of the present invention are susceptible to many implementations and applications, as will be readily apparent to persons skilled in the art from the invention hereof. The present invention expressly encompasses such modifications, enhancements and/or variations of the disclosed embodiments. Since many changes could be made in the above construction and many widely different embodiments of this invention could be made without departing from the scope thereof, it is intended that all matter contained in the drawings and specification shall be interpreted as illustrative and not in a limiting sense. Additional modifications, changes, and substitutions are intended in the foregoing invention. Accordingly, it is appropriate that the appended claims be construed broadly and in a manner consistent with the scope of the invention.

## Claims

1. An additive manufacturing method for the production of a component, the method comprising:
providing a material;
utilizing additive manufacturing to fabricate the component from the material; and
obtaining location-specific properties through in-situ controlling of a local cooling rate during the additive manufacturing to fabricate the component.

2. The method of claim 1, wherein the component is a composite-like material, and optionally the component is a hierarchical inhomogeneous composite-like material.

3. The method of claim 1 or 2, wherein the additive manufacturing comprises laser powder bed fusion.

4. The method of any preceding claim, wherein the component is an inhomogeneous structure with variable local mechanical properties across an entire volume of the inhomogeneous structure.

5. The method of any preceding claim, wherein:
the material comprises bulk metallic glass; and/or
the component comprises bulk metallic glass.

6. The method of any preceding claim, wherein controlling the local cooling rate comprises utilizing modeling.

7. The method of claim 6, wherein the modeling comprises utilizing an integrated computational fluid dynamics model (10) and analytical models (12, 14, 16).

8. The method of claim 6 or 7, wherein the modeling comprises utilizing a defect process map prediction fast acting model (12).

9. The method of any of claims 6 to 8, wherein the modeling comprises utilizing solidification map prediction models (14).

10. The method of any of claims 6 to 9, wherein the modeling comprises utilizing a phase field model (16) for microstructure prediction and customization.

11. The method of any preceding claim, wherein controlling the local cooling rate comprises utilizing a cryogenic cooling system (100) internally installed in a laser powder bed machine, or use of computational fluid dynamics models to control the local cooling rate during layer deposition.

12. The method of claim 11, wherein the cryogenic cooling system (100) is a liquid nitrogen cryogenic cooling system designed specifically for laser powder bed fusion machines, and where a specific mask (18) design and materials are used to prevent powder spatter during deposition.

13. The method of any preceding claim, wherein:
the component comprises alternating hard-soft zones or features by controlling the high cooling rate and its application direction; and/or
during additive manufacturing each layer of the component is initially built soft and then selected layers are hardened.

14. The method of any preceding claim, wherein the additive manufacturing comprises utilizing a laser in a pulsed regime.

15. The method of any preceding claim, wherein the component is a hybrid structure with crystalline grains in an amorphous matrix, and the hybrid structure is configured to accommodate plastic strain and impart ductility while maintaining fatigue resistance and elastic modulus.
